# EUROPÄISCHE PATENTSCHRIFT

(11) **EP 3 328 959 B1**
(45) Veröffentlichungstag und Bekanntmachung des Hinweises auf die Patenterteilung: **03.06.2020**
(21) Anmeldenummer: 16732446.6
(22) Anmeldetag: 16.06.2016
(51) Int. Cl.: C09J 183/06, C09J 183/12, C08L 71/12

(54) **VERWENDUNG EINES EIN-KOMPONENTENSYSTEMS ZUR BEFESTIGUNG VON VERANKERUNGSMITTELN**
USE OF A SINGLE-COMPONENT SYSTEM FOR SECURING ANCHORING MEANS
UTILISATION D'UN SYSTÈME À UN CONSTITUANT POUR FIXER DES MOYENS D'ANCRAGE

(30) Priorität: 30.07.2015 DE 102015112457
(43) Veröffentlichungstag der Anmeldung: 06.06.2018
(73) Patentinhaber: fischerwerke GmbH & Co. KG, 72178 Waldachtal (DE)
(72) Erfinder: VOGEL, Martin, 79286 Glottertal (DE); SCHLENK, Christian, 79211 Denzlingen (DE); WEINELT, Christian, 79331 Teningen (DE); GRÜN, Jürgen, 79268 Bötzingen (DE); ZANDER, Lars, 84503 Altötting (DE)
(86) Internationale Anmeldenummer: PCT/EP2016/001011
(87) Internationale Veröffentlichungsnummer: WO 2017/016623

(56) Entgegenhaltungen:
- DE-A1-102011 006 130
- DE-A1-102011 081 264
- DE-A1-102012 223 139

## Beschreibung

Die Erfindung betrifft die Verwendung eines einkomponentigen Befestigungs-Kunstharzes (Ein-Komponentensystem) für die Befestigung von Verankerungsmitteln in Löchern und Verfahren unter Verwendung des besagten Befestigungs-Kunstharzes, wie jeweils in den unabhängigen oder vorzugsweise einem abhängigen Anspruch definiert.

Silan-terminierte Polymere sind grundsätzlich bekannt als feuchtigkeitsaushärtende Bindemittel, die für eine Reihe von Zwecken, darunter die Herstellung von Klebstoffen, verwendet werden.

Ein Nachteil silan-terminierter Polymere ist, dass sie als Bestandteile von Klebstoffen sehr lange Aushärtezeiten benötigen, um mit dem Wasser aus Luft und Umgebung zu reagieren und so auszuhärten. Um die Reaktivität derartiger Systeme zu erhöhen, müssten erhebliche Mengen an Katalysatoren, typischerweise toxikologisch bedenkliche Zinnkatalysatoren, eingesetzt werden. Die marktbekannten, vollständig ausgehärteten silan-terminierten Polymere sind außerdem sehr weich und dehnbar mit geringen E-Modulen, hohen Bruchdehnungen und geringen Zugfestigkeiten. Deshalb wurden für die chemische Befestigungstechnik entsprechende Systeme bisher noch nicht vorgestellt.

Die DE 10 2011 081 264 A1 beschreibt vernetzbare Massen auf Basis einer Kombination aus organyloxysilanterminierten Polymeren und Organyloxysilangruppen aufweisenden Silikonharzen, welche als durch Wasserzusatz aus Luft oder in einer separaten Komponente aushärtend beschrieben werden. Das Dokument beschreibt in erster Linie Mittel zur Holzverklebung. DE 10 2012 223 139 A1 beschreibt ebenfalls nur Materialien, wobei die Zugscherfestigkeiten wieder nur mit Holz beschrieben werden. DE 10 2011 006 130 A1 schließlich erwähnt eine Haftfähigkeit der dort genannten Materialien, jedoch ohne konkreten Klebeversuch.

Es wurde nun überraschend gefunden, dass verkürzte Aushärtezeiten und sehr gute mechanische Messwerte und Auszugswerte gefunden werden, wenn man einkomponentige Kunstharze auf Basis selektierter - mindestens eine hydrolysierbare an Si gebundene Gruppe beinhaltender - silan-funktioneller Verbindungen verwendet. Überraschend reichen die Wassergehalte in Bausubstraten, wie insbesondere Beton und Ziegelsteinen, wie Hohlziegeln, auch bei einem einkomponentigen System aus, um eine relativ zügige Härtung dieser einkomponentigen Systeme ohne den Einsatz toxikologisch bedenklicher Katalysatoren zu erreichen, und es werden sehr gute mechanische Werte und Auszugswerte erzielt. Daher ist, entgegen den Erwartungen des Fachmanns, die Verwendung in diesem Bereich zugänglich. Dies ist auch insofern überraschend, als der Anmelderin kein einkomponentiges System auf dem Markt bekannt ist, welches für den Einsatz zum Befestigen von Verankerungselementen im Baubereich vorgesehen ist.

Außerdem ermöglichen die Klebstoffe beim erfindungsgemäßen Einsatz die Herstellung temperatur- und feuchtigkeitsstabiler Verbünde zwischen der Wand von Löchern und Verankerungselementen.

Damit gehen in der Anwendung erhebliche praktische Vereinfachungen einher, beispielsweise die Verwendung einfacher Behälter ohne Mehrkammersysteme, der Verzicht auf Statikmischer für mehrkomponentige Systeme mit deren immanenten Problematiken (beispielsweise Notwendigkeit kontinuierlicher Anwendung im Einsatz, um ein Erhärten im Statikmischer zu vermeiden; vollständige Durchmischung der Komponenten), sowie einfache Handhabbarkeit.

Die Erfindung betrifft daher in einer ersten Ausführungsform die Verwendung eines einkomponentigen Befestigungs-Kunstharzes zur Befestigung eines Verankerungselementes in einem Loch in einem wasserhaltigen Bausubstrat, wobei es sich bei dem einkomponentigen Befestigungs-Kunstharz um eines auf Basis einer unter Verwendung einer silan-haltigen Mischung von
(a) mindestens einer ein oder mehrere Silan-Gruppen beinhaltenden Verbindung, und
(b) einem mindestens eine hydrolysierbare an Si gebundene Gruppe beinhaltenden Silikonharz,
herstellbaren Reaktivabmischung zum Befestigen von Verankerungselementen in Löchern in Bausubstraten mit wasserhaltigen Lochwandungen, wobei nach deren Aushärten Verbundspannungen von 12 bis 35 N/mm², eine Zugfestigkeit von 10 bis 20 MPa, ein Zugmodul von 1 bis 5 GPa und eine Zugdehnung von 3 % oder weniger erhalten werden, handelt,
wobei die unter (a) genannte mindestens eine ein oder mehrere Silan-Gruppen beinhaltende Verbindung ein oder mehrere Verbindungen mit je Molekül mindestens einer Silan-Endgruppe der Teilformel (I) beinhaltet, 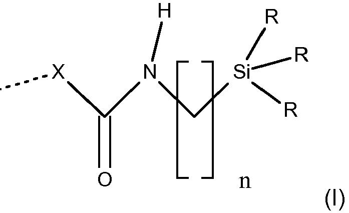 worin die gestrichelte Bindung die zum Rest des Moleküls, insbesondere eines Polyethylenglykols oder Polypropylenglykols oder Polyurethans, darstellt,
die Reste R unabhängig voneinander für C₁-C₁₈-Alkyl, insbesondere für Methyl oder Ethyl, oder für C₁-C₁₈-Alkoxy stehen mit der Maßgabe, dass mindestens einer der Reste für C₁-C₁₈-Alkoxyl steht,
X für NH oder vorzugsweise O steht und
n für eine Zahl von 1 bis 3 steht, insbesondere mit der Maßgabe, dass mindestens ein Teil der Reste ein n = 1 aufweist, vorzugsweise, dass n gleich 1 ist,
die vorzugsweise ein mittleres Molekulargewicht von 400 g/mol bis 30 000 g/mol, z.B. von 800 g/mol bis 13 000 g/mol hat, und
das unter (b) genannte mindestens eine hydrolysierbare an Si gebundene Gruppe beinhaltende Silikonharz Einheiten der Formel (II) beinhaltet

R¹ₐ(R²O)_{b}R³_{c}SiO_{(4-a-b-c)/2} (II)

worin
R¹ gleich oder verschieden sein kann und Wasserstoff, ein einwertiger SiC-gebundener C₁-C₁₈-Alkylrest, der unsubstituiert oder subsituiert sein kann, oder ein zweiwertiger unsubstituierter oder substituierter C₁-C₁₈-Alkylrest, der zwei Einheiten der Formel (II) verbrückt, ist;
R² gleich oder verschieden sein kann und Wasserstoff oder einen einwertigen, C₁-C₁₈-Alkylrest, der unsubstituiert oder substituiert sein kann, bedeutet,
R³ gleich oder verschieden sein kann und einen einwertigen, SiC-gebundenen Phenylrest, bedeutet, der jeweils vorzugsweise unsubstituiert oder ferner substituiert sein kann,
a gleich 0, 1, 2 oder 3 ist,
b gleich 0, 1, 2 oder 3, vorzugsweise 0, 1 oder 2, besonders bevorzugt 0 oder 1 ist, und c gleich 0, 1 oder 2, vorzugsweise 0 oder 1 ist,
mit der Maßgabe, dass die Summe aus a + b + c kleiner oder gleich 3 ist und vorzugsweise in mindestens 40 der Einheiten der Formel (II) die Summe aus b + c gleich 0 oder 1 ist; und wobei die Verbundspannungen gemessen werden, indem im Bausubstrat bei Raumtemperatur Bohrlöcher mit einem Durchmesser von 14 mm und einer Tiefe von 95 mm unter Bohrlochreinigung durch 2 x Ausblasen, 2 x Bürsten und 2 x Ausblasen erstellt werden und mit der einkomponentigen Masse verfüllt und in die noch weiche Masse M12-Gewindestangen eingedreht werden und nach der Aushärtezeit die Befestigung einem Adhäsionsversagenstest unterzogen wird,
und wobei die Zugfestigkeit, der Zugmodul und die Zugdehnung an Schulterstäben des Probekörpertryps 1 BA mit Gesamtlänge 75,6 mm, Länge des parallelen Teils von 39 mm, Einspannlänge 58 mm, Zuggeschwindigkeit 5 mm/min gemäß DIN EN ISO 527 bestimmt werden.

Eine weitere Ausführungsform der Erfindung betrifft die Verwendung eines vorstehend genannten oder nachstehend definierten einkomponentigen Befestigungs-Kunstharzes zur Befestigung eines Verankerungselementes in einem Bohrloch in einem wasserhaltigen Bausubstrat, insbesondere Beton oder Ziegelstein, wie Hohlziegel. Hierbei werden nach dem Aushärten Verbundspannungen von 12 bis 35 N/mm², eine Zugfestigkeit von 10 bis 20 MPa, z.B. 10 bis 18 MPa, ein Zugmodul von 1 bis 5 GPa, z.B. 1 bis 4 GPa und eine Zugdehnung von 3 % oder weniger erhalten, wobei die Paramater wie zuvor und in Anspruch 1 erwähnt ermittelt werden.. Die Verwendung kann auch ohne Reinigung des (insbesondere Bohr-) Lochs erfolgen. Weiterhin ist es auch möglich, das Bohrloch unter Verwendung von Wasser zu erstellen oder mit Wasser zu reinigen.

Eine weitere Ausführungsform der Erfindung betrifft ein Verfahren zum Befestigen eines Verankerungselements in einem Loch, insbesondere Bohrloch, in einem wasserhaltigen Bausubstrat, insbesondere Beton oder Ziegelstein, wie Hohlziegel, bei dem gleichzeitig oder nacheinander das Verankerungselement und ein vorstehend genanntes oder nachfolgend definiertes einkomponentiges Befestigungs-Kunstharz wie in Anspruch 1 oder einem abhängigen Anspruch davon definiert in das Loch eingebracht werden und das Befestigungs-Kunstharz aushärten gelassen wird. Das Verfahren kann auch ohne Reinigung des (insbesondere Bohr-)Lochs durchgeführt werden.

Bei der Befestigung in Hohlbaustoffen in den vorgenannten Verwendungen und Verfahren kann die Aushärtung auch (mindestens zusätzlich) durch Luftfeuchtigkeit oder insbesondere durch Feuchtigkeit, die in für Hohlbaustoffen üblichen Hilfsmitteln wie z.B. Siebhülsen enthalten ist, erfolgen. In einer besonderen Ausführungsform kann diese Siebhülse aus einem sehr hydrophilen wasserhaltigen Material (z.B. Polyamid) oder aus einem saugenden und vor Anwendung in Wasser zu tauchenden Material ausgeführt sein.

Leidglich für Referenzzwecke betrifft eine weitere Ausführungsform der vorliegenden Offenbarung eine Befestigungsanordnung, beinhaltend ein wasserhaltiges Bausubstrat, insbesondere Beton oder Ziegelstein, wie Hohlziegel, sowie, jeweils in das Loch eingebracht, ein Verankerungselement und ein wie vorstehend genanntes oder nachfolgend definiertes aushärtendes oder ausgehärtetes Befestigungs-Kunstharz.

Die nachfolgenden Definitionen dienen der Beschreibung bevorzugter Bedeutungen allgemeiner vor- und nachstehend genannter Begriffe und können einzelne, mehrere oder alle breiteren Begriffe, die zur Beschreibung der Erfindungsgegenstände verwendet werden, ersetzen, was zu bevorzugten Ausführungsformen der Erfindung führt, die hier alle als offenbart gelten.

Unter einem wasserhaltigen Bausubstrat ist insbesondere ein solches zu verstehen, das von sich aus reaktionsfähiges ("freies") Wasser beinhaltet, insbesondere im Bereich der Bohrlochwandungen, und/oder das Wasser wegen der Verwendung von Wasser bei der Erstellung des Bohrloches und/oder dessen Reinigung mit Wasser beinhaltet. Wasserhaltig bedeutet dabei vorzugsweise nicht, dass die entsprechenden Bausubstrate unter Wasser liegen und somit die Bohrlöcher mit Umgebungswasser gefüllt sind, doch können die Bausubstrate bzw. Lochwandungen feuchtigkeitsbenetzt sein oder das Wasser, z.B. durch Diffusion oder kapillare Kräfte oder dergleichen, aus dem Substratmaterial der Lochwandung zugänglich sein.

Bei der unter Verwendung einer silan-haltigen Mischung von (a) mindestens einer ein oder mehrere Silan-Gruppen beinhaltenden Verbindung und (b) einem - mindestens eine hydrolysierbare an Si gebundene Gruppe beinhaltenden - Silikonharz herstellbaren (was insbesondere hergestellt bedeuten kann) Reaktivabmischung, wird als Verbindung(en) (a) vorzugsweise ein silan-terminiertes Polyethylen- oder insbesondere Polypropylenglykol oder Polyurethan verwendet, das Endgruppen der Formel -O-(C=O)-NH-(CH₂)_{(1, 2 oder 3)}-SiCH₃(OCH₃)₂ aufweist und vorzugsweise eine mittlere Molmasse von 10 000 bis 14 000 Dalton, insbesondere von etwa 12 000 Dalton, hat.

Ein bevorzugtes Beispiel für derartige Verbindungen ist käuflich unter dem Namen (mit Polypropylenpolymerbasis) GENIOSIL® 5-E10 von der Wacker Chemie AG, München, Deutschland, erhältlich.

Als - mindestens eine hydrolysierbare an Si gebundene Gruppe beinhaltendes - Silikonharz (b) finden insbesondere entsprechende Silikonharze in Form von Phenyl- und/oder Methylsilikonharzen Verwendung, welche, bezogen auf die Masse an Silikonharz (b) insgesamt (= 100 Gew.-%), 0 bis 65 Gew.-% Struktureinheiten mit phenylfunktionellen T-Einheiten, 0 bis 95 Gew.-% an methylfunktionellen T- und/oder D-, insbesondere T-Einheiten und 5 bis 40 Gew.-% hydrolysierbare, an Si gebundene Gruppen beinhalten, daneben noch Q- und M-Einheiten enthalten sein können, und außerdem vorzugsweise eine mittlere Molmasse von 400 bis 3500 Dalton, beispielsweise von 800 bis 1300 Dalton, aufweisen. Es wurde gefunden, dass, je höher der Anteil an methylfunktionellen T-Einheiten relativ zu den phenylfunktionellen Einheiten ist, desto bessere mechanische Eigenschaften erzielt werden können. Der Gehalt an D-Einheiten in diesen Silikonharzen liegt vorzugsweise unter 10 Gew.-%.

Als hydrolysierbare Gruppe(n) sind insbesondere an Si gebundene Methoxy, Ethoxy oder Propoxygruppen vorgesehen, vorzugsweise Methoxy.

Ein bevorzugtes Beispiel für derartige Verbindungen ist käuflich unter dem Namen SILRES® IC 368 oder Silres MSE 100 von der Wacker Chemie AG, München, Deutschland, erhältlich.

Ein bevorzugtes Beispiel einer als erfindungsgemäß verwendbaren Reaktivabmischung (mit Bestandteilen (a) und (b)) ist käuflich unter dem Namen GENIOSIL® XB-502 von der Wacker Chemie AG, München, Deutschland, erhältlich.

Weitere für das einkomponentige Kunstharz-Befestigungssystem und insbesondere für die silan-haltige Mischung verwendbare Bestandteile sind aus DE 10 2011 081 264 A1 ersichtlich, die hier als Referenz für das Wissen des Fachmanns zitiert wird.

Wo von mindestens einer ein oder mehrere Silan-Gruppen beinhaltenden Verbindung für (a) die Rede ist, steht das für eine einzige oder eine Mischung von derartigen Verbindungen.

Der Anteil dieser silan-haltigen Mischung (Bestandteile (a) und (b)) an der Gesamtmasse des einkomponentigen Kunstharz-Befestigungssystems) kann bei 0,1 bis 100, insbesondere von 5 bis 60, z.B. bei 10 bis 50 Gew.% liegen.

Das Massenverhältnis der Bestandteile (a) zu (b) in der Reaktivabmischung beträgt vorzugsweise zwischen 2:1 und 1:10, insbesondere zwischen 3:2 und 1:3.

Wo von "unsubstituiert oder substituiert" die Rede ist, können, falls Substituenten vorhanden sind, diese beispielsweise C₁-C₁₈-Alkyl-, wie Methyl oder Ethyl, Phenyl-, oder Halogen-, insbesondere Chlorsubstituenten, sein, beispielsweise 1 bis 3 unabhängig voneinander ausgewählte derartige Substituenten je damit substituiertem Rest.

Bausubstrate sind insbesondere Beton oder Ziegelstein, vorzugsweise Hohlziegelstein oder insbesondere Beton.

Unter einem Loch ist insbesondere ein Bohrloch zu verstehen. Dieses kann gereinigt (z.B. durch ein- oder mehrmaliges Ausblasen und/oder Bürsten) oder ungereinigt der erfindungsgemäßen Verwendung bzw. dem erfindungsgemäßen Verfahren zugeführt werden.

Unter Verankerungselementen sind insbesondere solche aus Metall, z.B. Hinterschneidanker, Gewindestangen, Schrauben, Bohranker, Bolzen, oder ferner einem anderen Material, wie Kunststoff oder Holz, zu verstehen.

Die Verbundspannungen werden folgendermaßen gemessen: Im Bausubstrat (vorzugsweise Beton, z.B. C20/C25) werden bei Raumtemperatur Bohrlöcher mit einem Durchmesser von 14 mm und einer Tiefe von 95 mm erstellt (Bohrlochreinigung: 2 x Ausblasen, 2 x Bürsten, 2 x Ausblasen). Die Bohrlöcher werden mit der einkomponentigen Masse verfüllt und in die noch weiche Masse M12-Gewindestangen eingedreht. Nach der Aushärtezeit (die bis zur vollen Aushärtung z.B. 3 bis 10 Tage betragen kann) wird die Befestigung einem Adhäsionsversagenstest unterzogen.

Die Zugfestigkeit, der Zugmodul und die Zugdehnung werden bestimmt an Schulterstäben des Probekörpertyps 1 BA (Gesamtlänge 75,6 mm, Länge I des parallelen Teils von 39 mm, Einspannlänge 58 mm, Zuggeschwindigkeit 5 mm/min) gemäß DIN EN ISO 527.

Neben der Reaktivabmischung kann ein erfindungsgemäß verwendbares einkomponentiges Befestigungs-Kunstharz vorteilhaft auch weitere Silane beinhalten, beispielsweise weitere Silane, die ein oder mehrere hydrolysierbare Gruppen, wie Alkoxy-, z.B. Methoxy- oder Ethoxy-, am Siliciumatom gebunden enthalten. Die weiteren Silane sind ausgewählt aus der Gruppe, welche 3-Aminopropyltrialkoxysilane, wie 3-Aminopropyl-trimethoxysilan oder 3-Aminopropyl-triethoxysilan, N-(2-Aminoethyl)-3-aminopropyl-trimethoxysilan, N-Phenylaminomethylmethyldimethoxysilan, ferner (insbesondere 3-)Glycidyloxypropyltrialkoxysilane (besonders bevorzugt!), wie 3-Glycidyloxypropyltrimethoxysilan oder -ethoxysilan, Glycidyloxymethyltrimethoxysilan, 3-Glycidyloxypropylmethyldi-methoxysilan, ferner Bis-(3-trialkoxysilylpropyl)amin, wie Bis-(3-trimethoxysilylpropyl)amin oder Bis-(3-triethoxysilylpropyl)amin, 3-Mercaptopropyltrialkoxysilan, wie 3-Mercaptopropyltrimethoxysilan, und 3-(Meth)acryloyl-oxypropyltrialkoxysilanen, wie 3-(Meth)acryloyl-oxypropyltrimethoxysilan oder -triethoxysilan oder 3-(Meth)acryloyl-oxymethyltrimethoxysilan oder -triethoxysilan, 3-(Meth)acryloyl-oxypropylmethyldimethoxysilan oder Alkenylalkoxysilane, wie Vinylalkoxysilane, z.B. Vinyltrimethoxysilan oder Vinyltriethoxysilan, und/ oder ferner in allen Ausführungsformen Tetraalkoxysilan, wie Tetraethoxysilan, Tetramethoxysilan oder Tetrapropoxysilan oder Alkoxypolysilikat (Ester der (Poly)kieselsäure), wie Ethyl- oder Propylpolysilikat; N-Cyclohexylamino-methyl-methyldiethoxysilan, N-Cyclohexylaminomethyltrimethoxysilan, Phenylaminomethyl-trimethoxysilan, Phenylaminomethylmethyldimethoxysilan, oder 3-(Meth)acryloyl-oxy-methyltrialkoxy (wie trimethoxy) silan, oder Gemische von zwei oder mehr davon, umfasst. Der Anteil dieser Verbindung(en) bzw. der weiteren Silane an der Gesamtmasse des einkomponentigen Kunstharz-Befestigungssystems kann bei 0,01 bis 30, z.B. bei 0,1 bis 8 Gew.% liegen.

Besonders bevorzugt sind 3-Aminopropyl-tri(m)ethoxysilan, N-(2-Aminoethyl)-3-aminopropyltri(m)ethoxysilan, Vinyltri(m)ethoxysilan, und/oder N-Phenylaminomethylmethyldimethoxysilan.

Die weiteren Silane können einen aktivierenden Effekt (wodurch für sie der Begriff Aktivator verwendet werden kann) auf die Aushärtung des erfindungsgemäß verwendbaren einkomponentigen Befestigungs-Kunstharzes ausüben.

"Beinhalten(d)" oder "umfassen(d)" bedeutet, dass neben den genannten Bestandteilen oder Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Bestandteilen oder Komponenten oder Merkmale bedeutet. "Auf Basis von" bedeutet ebenfalls "beinhaltend".

Wo das Attribut "ferner" erwähnt wird, bedeutet dies, dass Merkmale ohne dieses Attribut stärker bevorzugt sein können.

"Herstellbar" (= erhältlich) bedeutet vorzugsweise "hergestellt" oder "erhalten", ferner jedoch auf andere Weise hergestellt/erhalten als direkt beschrieben.

"Und/oder" bedeutet, dass die genannten Merkmale/Substanzen jeweils alleine oder in Kombination von zwei oder mehr der jeweils genannten Merkmale/Substanzen vorliegen können.

Daneben können ein oder mehrere weitere übliche Zusätze, beispielsweise ausgewählt aus Füllstoffen (Zuschlagsstoffe) (bevorzugt), Katalysatoren, Haftvermittlern, Wasserfängern und Additiven beinhaltet sein.

"Etwa" bedeutet insbesondere, dass ein damit gekennzeichneter Zahlenwert um ± 10 %, vorzugsweise um ± 5 %, vom genannten Wert abweichen kann, beispielsweise um ± 2 %.

Als Füllstoffe finden beispielsweise übliche Füllstoffe, insbesondere Zemente (z.B. Portlandzemente oder Tonerdeschmelzzemente), Kreiden, Sand, Quarzsand (bevorzugt), Quarzmehl (bevorzugt), Korund oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Gemische davon.. In einer besonderen Ausführungsform der Erfindung sind die Füllstoffe aminosilanisiert. Es wird eine besonderer Effekt durch aminosilanbehandelte Füllstoffe wie aminosilanbehandeltes Quarzmehl (z.B Silbond AST® der Fa. Quarzwerke GmbH), aminosilanbehandelte Kieselerde (z.B. Aktisil AM® von Hoffmann Mineral), oder aminosilan-behandelte pyrogene Kieselsäuren erzielt, da durch diese aminosilanbehandelten Füllstoffe eine gleichmäßige Aktivierung und Beschleunigung der Aushärtung erreicht werden kann. Ferner sind auch mit anderen Silanen (ohne Aminogruppen) silanisierte Füllstoffe einsetzbar. Der Anteil an Füllstoffen beträgt vorzugsweise 0 bis 90 Gew.-%, beispielsweise 10 bis 90 Gew.-%, jeweils an der Gesamtmasse des einkomponentigen Befestigungs-Kunstharzes. Zusätzlich oder alternativ können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Als Katalysatoren können, falls überhaupt erforderlich bzw. erwünscht, organische LewisSäuren wie Titan-, Bismut, Zirkon und Zinnverbindungen, oder metallfreie Katalysatoren, Amine wie z.B. primäre (z.B. AMMO) oder tertiäre Amine (z.B. DBU = 1,8-Diazabicyclo-5,4,0-undecen-7) oder andere basische Verbindungen wie Metalloxide und -hydroxide (z.B. CaO, Ca(OH)₂, KOH, NaOH, LiOH, Al(OH)₄⁻, Silikate), oder saure Verbindungen, wie anorganische oder organische Säuren, Verwendung finden. Der Anteil kann bei 0 bis 10 Gew.-%, z.B. 0,05 bis 5 Gew.-%, insbesondere zwischen 0,1 und 3 % jeweils bezogen auf die Gesamtmasse an Kunstharz, liegen.

Als Haftvermittler können Epoxysilane oder andere oben als "weitere Silane" genannte Verbindungen zugesetzt sein, beispielsweise in einem Gewichtsanteil von 0 bis 10, z.B. von 0,1 bis 8 Gew.-%, bezogen auf die Gesamtmasse des Befestigungs-Kunstharzes, zugesetzt sein.

Als Wasserfänger können Silane mit hydrolysierbaren Gruppen oder Orthoester verwendet werden, die in einem Anteil von 0 bis 20 Gew.-%, z.B. 0,1 bis 5 Gew.-%, bezogen auf die Gesamtmasse des Befestigungs-Kunstharzes, zugesetzt sein können.

Weitere Additive können zugesetzt sein, wie Farbstoffe, Pigmente, Antioxidantien, UV-Stabilisatoren, Weichmacher, Rheologieadditive, Flammschutzmittel oder Fungizide, oder zwei oder mehr davon. Sie können in einem Anteil von beispielsweise 0 bis 20 Gew.-%, z.B. 0,1 bis 20 Gew.-%, bezogen auf die Gesamtmasse des Kunstharzes, zugesetzt sein.

Für all diese Zusätze finden sich Beispiele in DE 10 2011 081 264 A1, die hier für Referenzzwecke verwiesen wird.

Die erfindungsgemäß verwendbaren einkomponentigen Befestigungs-Kunstharze können in üblichen Behältnissen, wie Eimern, Tuben, Kartuschen, Folienbeuteln, Töpfchen oder dergleichen, wasserdicht gelagert und aus diesen heraus verwendet werden.

Weitere vorteilhafte Ausführungsformen der Erfindung finden sich in den Ansprüchen, vorzugsweise den abhängigen Ansprüchen, die hier in die Beschreibung durch Bezugnahme inkorporiert sind.

### Beispiele:

Die nachfolgenden Beispiele dienen der Illustration der Erfindung, ohne ihren Umfang einzuschränken.

### Beispiel 1: Erfindungsgemäß, verwendbares einkomponentiges Befestigungs-Kunstharz

Folgende Bestandteile werden miteinander gemischt:

| Bezeichnung des Rohstoffes | Menge in Gramm | Menge in Gew.-% |
|---|---|---|
| Geniosil XB 502 | 39,80 | 39,80 |
| AMMO | 3,00 | 3,00 |
| Alsigran Micro 5 | 57,00 | 57,00 |
| DBU | 0,20 | 0,20 |
| | 100,00 | 100,00 |

### Beispiel 2: Verwendung des einkomponentigen Befestigungs-Kunstharzes aus Beispiel 1 zur Befestigung eines Bolzens

Nach dem im allgemeinen Teil beschriebenen Verfahren wurden die Verbundspannungen ermittelt.

Unter diesen Bedingungen wurden folgende Messergebnisse erhalten:

| | Verbundspannung (N/mm²) | | |
|---|---|---|---|
| Aushärtezeit [d] | Einkomponentiges Befestigungs-Kunstharz aus Beispiel 1 | Fix all High Tack (Einkomponenten-Klebstoff der Soudal Deutschland, Leverkusen, Deutschland) (Hybridpolymerbasiert) | Konstruktionsklebstoff KK (1-KomponentenKlebstoff der fischerwerke, Waldachtal, Deutschland) (Polyurethanbasiert) |
| 1 | 2,2 | Kein Verbund | Kein Verbund |
| 2 | 7,8 | | |
| 3 | 11,4 | | |
| 7 | 10,8 | 1,0 | 3,7 |
| 28 | 11,9 | | |

| | | | |
|---|---|---|---|
| d = Tage | | | |

Zur mechanischen Charakterisierung wurden die Zugfestigkeit σ B, das Zugmodul E und die Zugdehnung bestimmt wie im allgemeinen Teil beschrieben:
Unter diesen Bedingungen wurden folgende Messergebnisse erhalten:

| System | Zugfestigkeit σ B [MPa] | Zugmodul E [GPa] | Zugdehnung [%] |
|---|---|---|---|
| Formulierung aus Beispiel 1 | 12,4 | 1,3 | 1,4 |
| Fix all High Tack | 3,7 | 0,03 | 69,8 |
| Konstruktionsklebstoff KK | 7,5 | 0,6 | 4,2 |

Diese Messergebnisse zeigen, dass ein erfindungsgemäß verwendbares einkomponentiges Befestigungs-Kunstharz für die Anwendung zur Befestigung von Verankerungselementen in Bohrlöchern gegenüber - bereits für ihre sonstigen Zwecke sehr guten - kommerziellen Einkomponentenklebern deutlich verbesserte Eigenschaften zeigt.

## Patentansprüche

1. Verwendung eines einkomponentigen Befestigungs-Kunstharzes zur Befestigung eines Verankerungselementes in einem Loch in einem wasserhaltigen Bausubstrat, wobei es sich bei dem einkomponentigen Befestigungs-Kunstharz um eines auf Basis einer unter Verwendung einer silan-haltigen Mischung von
(a) mindestens einer ein oder mehrere Silan-Gruppen beinhaltenden Verbindung und
(b) einem mindestens eine hydrolysierbare an Si gebundene Gruppe beinhaltenden Silikonharz,
herstellbaren Reaktivabmischung zum Befestigen von Verankerungselementen in Löchern in Bausubstraten mit wasserhaltigen Lochwandungen, wobei nach deren Aushärten Verbundspannungen von 12 bis 35 N/mm², eine Zugfestigkeit von 10 bis 20 MPa, ein Zugmodul von 1 bis 5 GPa und eine Zugdehnung von 3 % oder weniger erhalten werden, handelt;
wobei
die unter (a) genannte mindestens eine ein oder mehrere Silan-Gruppen beinhaltende Verbindung ein oder mehrere Verbindungen mit je Molekül mindestens einer Silan-Endgruppe der Teilformel (I) beinhaltet, 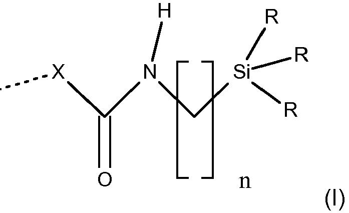 worin die gestrichelte Bindung die zum Rest des Moleküls, insbesondere eines Polyethylenglykols oder Polypropylenglykols oder Polyurethans, darstellt,
die Reste R unabhängig voneinander für C₁-C₁₈-Alkyl, insbesondere für Methyl oder Ethyl, oder für C₁-C₁₈-Alkoxy stehen mit der Maßgabe, dass mindestens einer der Reste für C₁-C₁₈-Alkoxyl steht,
X für NH oder vorzugsweise O steht und
n für eine Zahl von 1 bis 3 steht, insbesondere mit der Maßgabe, dass mindestens ein Teil der Reste ein n = 1 aufweist, vorzugsweise, dass n gleich 1 ist, und
das unter (b) genannte mindestens eine hydrolysierbare an Si gebundene Gruppe beinhaltende Silikonharz Einheiten der Formel (II) beinhaltet
R¹ₐ(R²O)_{b}R³_{c}SiO_{(4-a-b-c)/2} (II)
worin
R¹ gleich oder verschieden sein kann und Wasserstoff, ein einwertiger SiC-gebundener C₁-C₁₈-Alkylrest, der unsubstituiert oder subsituiert sein kann, oder ein zweiwertiger unsubstituierter oder substituierter C₁-C₁₈-Alkylrest, der zwei Einheiten der Formel (II) verbrückt, ist;
R² gleich oder verschieden sein kann und Wasserstoff oder einen einwertigen, C₁-C₁₈-Alkylrest, der unsubstituiert oder substituiert sein kann, bedeutet,
R³ gleich oder verschieden sein kann und einen einwertigen, SiC-gebundenen Phenylrest, bedeutet, der jeweils vorzugsweise unsubstituiert oder ferner substituiert sein kann,
a gleich 0, 1, 2 oder 3 ist,
b gleich 0, 1, 2 oder 3, vorzugsweise 0, 1 oder 2, besonders bevorzugt 0 oder 1 ist, und
c gleich 0, 1 oder 2, vorzugsweise 0 oder 1 ist,
mit der Maßgabe, dass die Summe aus a + b + c kleiner oder gleich 3 ist und vorzugsweise in mindestens 40 der Einheiten der Formel (II) die Summe aus b + c gleich 0 oder 1 ist; und
wobei die Verbundspannungen gemessen werden, indem im Bausubstrat bei Raumtemperatur Bohrlöcher mit einem Durchmesser von 14 mm und einer Tiefe von 95 mm unter Bohrlochreinigung durch 2 x Ausblasen, 2 x Bürsten und 2 x Ausblasen erstellt werden und mit der einkomponentigen Masse verfüllt und in die noch weiche Masse M12-Gewindestangen eingedreht werden und nach der Aushärtezeit die Befestigung einem Adhäsionsversagenstest unterzogen wird,
und wobei die Zugfestigkeit, der Zugmodul und die Zugdehnung an Schulterstäben des Probekörpertryps 1 BA mit Gesamtlänge 75,6 mm, Länge des parallelen Teils von 39 mm, Einspannlänge 58 mm, Zuggeschwindigkeit 5 mm/min gemäß DIN EN ISO 527 bestimmt werden.

2. Verwendung nach Anspruch 1, worin
als die unter (a) genannte mindestens eine ein oder mehrere Silan-Gruppen beinhaltende Verbindung ein silan-terminiertes Polyethylen- oder insbesondere Polypropylenglykol ist, das Endgruppen der Formel -O-(C=O)-NH-(CH₂)(_{1, 2 oder 3)}-SiCH₃(OCH₃)₂ aufweist und
das unter (b) genannte mindestens eine hydrolysierbare an Si gebundene Gruppe beinhaltende Silikonharz ein Phenyl- und/oder Methylsilikonharz ist, welches, bezogen auf die Masse an Silikonharz (b) insgesamt, 0 bis 65 Gew.-% Struktureinheiten mit phenylfunktionellen T-Einheiten, 0 bis 95 Gew.-% an methylfunktionellen T- und/oder D-, insbesondere T-Einheiten und 5 bis 40 Gew.-% hydrolysierbare, an Si gebundene Gruppen beinhaltet, wobei der Gehalt an D-Einheiten vorzugsweise unter 10 Gew.-% liegt.

3. Verwendung nach einem der Ansprüche 1 oder 2, **dadurch gekennzeichnet, dass** der Anteil an der (a) mindestens einen ein oder mehrere Silan-Gruppen beinhaltenden Verbindung und (b) dem mindestens eine hydrolysierbare an Si gebundene Gruppe beinhaltenden Silikonharz an der Gesamtmasse des Kunstharzes jeweils bei 0,1 bis 100, z.B. bei 5 bis 60 Gew.-%, z.B. bei 10 bis 50 Gew.-% liegt und das Verhältnis der Bestandteile (a) und (b), bezogen auf die Masse von (a) und (b) zusammen, zwischen 2:1 und 1:10, insbesondere zwischen 3:2 und 1:3 eingestellt ist.

4. Verwendung nach einem der Ansprüche 1 bis 3, **dadurch gekennzeichnet, dass** es noch weitere Silane, insbesondere 3-Aminopropyl-trimethoxysilan, N-(2-Aminoethyl)-3-aminopropyl-trimethoxysilan, Vinyltrimethoxysilan, und/oder N-Phenylaminomethylmethyldimethoxysilan, beinhaltet.

5. Verwendung nach einem der Ansprüche 1 bis 4, **dadurch gekennzeichnet, dass** es einen oder mehrere weitere übliche Zusätze, insbesondere ausgewählt aus Füllstoffen, Katalysatoren, Haftvermittlern, Wasserfängern und Additiven, beinhaltet.

6. Verwendung nach einem der Ansprüche 1 bis 5 wobei es sich bei dem Loch um ein Bohrloch in einem Bausubstrat mit wasserhaltigen Lochwandungen handelt.

7. Verwendung nach Anspruch 6 eines einkomponentigen Befestigungs-Kunstharzes, wobei es sich bei dem Bausubstrat um eines aus Ziegelstein oder vorzugsweise aus Beton handelt.

8. Verfahren zum Befestigen eines Verankerungselements in einem Loch, insbesondere einem Bohrloch, in einem Bausubstrat mit wasserhaltiger Lochwandung, wobei nach dem Aushärten Verbundspannungen von 12 bis 35 N/mm², eine Zugfestigkeit von 10 bis 20 MPa, ein Zugmodul von 1 bis 3 GPa und eine Zugdehnung von 3 % oder weniger wie in Anspruch 1 definiert erhalten werden, wobei gleichzeitig oder nacheinander das Verankerungselement und ein Befestigungs-Kunstharz, wie es in einem der Ansprüche 1 bis 5 in das Loch definiert ist, eingebracht werden und das Befestigungs-Kunstharz aushärten gelassen wird.

9. Verfahren nach Anspruch 8, wobei es sich bei dem Bausubstrat um eines aus Ziegelstein oder vorzugsweise aus Beton handelt.

10. Befestigungsanordnung, beinhaltend ein Bausubstrat mit einem Loch mit wasserhaltiger Lochwandung, insbesondere Beton oder Ziegelstein, wie Hohlziegel, sowie, jeweils in das Loch eingebracht, ein Verankerungselement und ein wie in einem der Ansprüche 1 bis 5 definiertes aushärtendes oder ausgehärtetes Befestigungs-Kunstharz.

## Claims

1. Use of a single-component synthetic fixing resin for fixing an anchoring element in a hole in a water-containing building substrate, wherein the single-component synthetic fixing resin is one based on a reactive mixture producible using a silane-containing mixture of
(a) at least one compound that includes one or more silane groups and
(b) a silicone resin that includes at least one hydrolysable Si-bonded group,
for fixing anchoring elements in holes in building substrates with water-containing hole walls, wherein, after the curing thereof, bond stresses of from 12 to 35 N/mm², a tensile strength of from 10 to 20 MPa, a tensile modulus of from 1 to 5 GPa and a tensile elongation of 3 % or less are obtained;
wherein
the at least one compound that includes one or more silane groups mentioned under (a) includes one or more compounds having per molecule at least one silane terminal group of the partial formula (I) 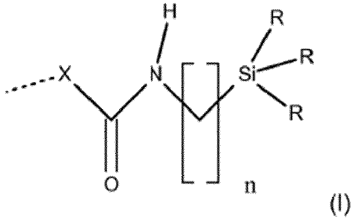 wherein the dashed bond represents the bond to the rest of the molecule, especially a polyethylene glycol or polypropylene glycol or polyurethane,
the radicals R independently of one another denote C₁-C₁₈alkyl, especially methyl or ethyl, or C₁-C₁₈alkoxy, with the proviso that at least one of the radicals denotes C₁-C₁₈alkoxyl,
X denotes NH or preferably O, and
n denotes a number from 1 to 3, especially with the proviso that at least some of the radicals have an n = 1, preferably that n is 1,
and
the silicone resin that includes at least one hydrolysable Si-bonded group mentioned under (b) includes units of the formula (II)
R¹ₐ(R²O)_{b}R³_{c}SiO_{(4-a-b-c)/2} (II)
wherein
R¹ can be identical or different and is hydrogen, a monovalent, SiC-bonded C₁-C₁₈alkyl radical, which can be unsubstituted or substituted, or a divalent unsubstituted or substituted C₁-C₁₈alkyl radical which bridges two units of the formula (II);
R² can be identical or different and is hydrogen or a divalent C₁-C₁₈alkyl radical which can be unsubstituted or substituted,
R³ can be identical or different and is a monovalent, SiC-bonded phenyl radical which in each case can be preferably unsubstituted or, furthermore, substituted,
a is 0, 1, 2 or 3,
b is 0, 1, 2 or 3, preferably 0, 1 or 2, especially preferably 0 or 1, and
c is 0, 1 or 2, preferably 0 or 1,
with the proviso that the sum of a + b + c is less than or equal to 3 and preferably in at least 40 of the units of the formula (II) the sum of b + c is 0 or 1; and
wherein the bond stresses are measured by creating drilled holes of 14 mm diameter and 95 mm depth in the building substrate at room temperature, with the drilled holes being cleaned by 2 x blowing, 2 x brushing and 2 x blowing, and filling the drilled holes with the single-component composition and screwing M12 threaded rods into the composition while still soft and, after the curing time, subjecting the fixing to an adhesion failure test,
and wherein the tensile strength, the tensile modulus and the tensile elongation are determined using dumbbell test specimens of type 1 BA having a total length of 75.6 mm, a length of the parallel portion of 39 mm, a clamping length of 58 mm, and a pulling speed of 5 mm/min in accordance with DIN EN ISO 527.

2. Use according to claim 1, wherein
the at least one compound that includes one or more silane groups mentioned under (a) is a silane-terminated polyethylene glycol or especially polypropylene glycol, which has terminal groups of the formula -O-(C=O)-NH-(CH₂)_{(1, 2 or 3)}-SiCH₃(OCH₃)₂, and
the silicone resin that includes at least one hydrolysable Si-bonded group mentioned under (b) is a phenyl and/or methyl silicone resin which, based on the mass of silicone resin (b) as a whole, includes from 0 to 65 % by weight structural units having phenyl-functional T units, from 0 to 95 % by weight methyl-functional T and/or D units, especially T units, and from 5 to 40 % by weight hydrolysable, Si-bonded groups, wherein the content of D units is preferably less than 10 % by weight.

3. Use according to either one of claims 1 and 2, **characterised in that** the proportion of the (a) at least one compound that includes one or more silane groups and (b) the silicone resin that includes at least one hydrolysable Si-bonded group in the total mass of the synthetic resin is in each case from 0.1 to 100 % by weight, for example from 5 to 60 % by weight, for example from 10 to 50 % by weight, and the ratio of the constituents (a) and (b), based on the mass of (a) and (b) together, is set at between 2:1 and 1:10, especially between 3:2 and 1:3.

4. Use according to any one of claims 1 to 3, **characterised in that** it includes further silanes, especially 3-aminopropyl-trimethoxysilane, N-(2-aminoethyl)-3-aminopropyl-trimethoxysilane, vinyl trimethoxysilane, and/or N-phenylaminomethylmethyldimethoxysilane.

5. Use according to any one of claims 1 to 4, **characterised in that** it includes one or more further customary additional ingredients, especially selected from fillers, catalysts, adhesion promoters, water scavengers and additives.

6. Use according to any one of claims 1 to 5, wherein the hole is a drilled hole in a building substrate with water-containing hole walls.

7. Use according to claim 6 of a single-component synthetic fixing resin, wherein the building substrate is one made of brick or preferably of concrete.

8. Method of fixing an anchoring element in a hole, especially a drilled hole, in a building substrate with a water-containing hole wall, wherein, after curing, bond stresses of from 12 to 35 N/mm², a tensile strength of from 10 to 20 MPa, a tensile modulus of from 1 to 3 GPa and a tensile elongation of 3 % or less, as defined in claim 1, are obtained, wherein the anchoring element and a synthetic fixing resin, as defined in any one of claims 1 to 5, are introduced into the hole simultaneously or one after the other and the synthetic fixing resin is allowed to cure.

9. Method according to claim 8, wherein the building substrate is one made of brick or preferably of concrete.

10. Fixing arrangement, including a building substrate having a hole with a water-containing hole wall, especially concrete or brick, such as perforated brick, and, in each case introduced into the hole, an anchoring element and a curing or cured synthetic fixing resin as defined in any one of claims 1 to 5.

## Revendications

1. Utilisation d'une résine synthétique de fixation à un composant pour la fixation d'un élément d'ancrage dans un trou dans un substrat de construction contenant de l'eau, la résine synthétique de fixation à un composant étant à base d'un mélange réactif pouvant être préparé par l'utilisation d'un mélange contenant un silane composé
(a) d'au moins un composé contenant un ou plusieurs groupes silane et
(b) d'au moins une résine de silicone contenant un groupe hydrolysable lié à Si,
pour la fixation de moyens d'ancrage dans des trous dans des substrats de construction comportant des parois de trous contenant de l'eau, des tensions composites de 12 à 35 N/mm², une résistance à la traction de 10 à 20 MPa, un module de traction de 1 à 5 GPa et un allongement à la traction de 3 % ou moins étant obtenus après son durcissement ;
l'au moins un composé contenant un ou plusieurs groupes silane mentionné dans (a) contenant un ou plusieurs composés comportant au moins un groupe terminal silane de formule partielle (1) par molécule, 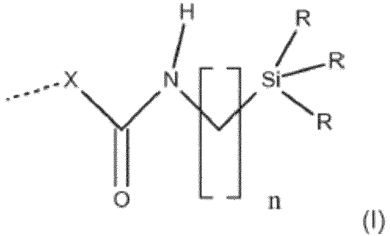 dans laquelle la liaison en pointillés indiquant la liaison au reste de la molécule, en particulier d'un polyéthylèneglycol ou d'un polypropylèneglycol ou d'un polyuréthane, les radicaux R représentant indépendamment les uns des autres C₁₋₁₈-alkyle, en particulier méthyle ou éthyle, ou C₁₋₁₈-alcoxy, étant entendu qu'au moins un des radicaux représente C₁₋₁₈-alcoxy,
X représente NH ou de préférence O et
n représente un nombre de 1 à 3, en particulier, étant entendu qu'au moins une partie des radicaux présente un n = 1, de préférence que n est égal à 1,
et
l'au moins une résine de silicone mentionnée dans (b) contenant un groupe hydrolysable lié à Si contenant des motifs de formule (II)
R¹ₐ(R²O)_{b}R³_{c}SiO_{(4-a-b-c)/2} (II)
dans laquelle
R¹ peut être identique ou différent et est hydrogène, un radical monovalent C₁₋₁₈-alkyle lié par SiC, qui peut être non substitué ou substitué, ou un radical divalent C₁₋₁₈-alkyle non substitué ou substitué, qui ponte deux motifs de formule (II) ; R² peut être identique ou différent et signifie hydrogène ou un radical monovalent C₁₋₁₈-alkyle, qui peut être non substitué ou substitué,
R³ peut être identique ou différent et signifie un radical monovalent phényle lié par SiC, qui à chaque fois peut-être de préférence non substitué ou en outre substitué,
a est égal à 0, 1, 2 ou 3,
b est égal à 0, 1, 2 ou 3, de préférence 0, 1 ou 2, particulièrement préférablement 0 ou 1, et
c est égal à 0, 1 ou 2, de préférence 0 ou 1, étant entendu que la somme de a + b + c est inférieure ou égale à 3 et de préférence dans au moins 40 des motifs de formule (II) la somme de b + c est égale à 0 ou 1 ; et
les tensions composites étant mesurées en préparant des puits dans le substrat de construction à température ambiante dotés d'un diamètre de 14 mm et d'une profondeur de 95 mm en procédant à un nettoyage des puits par 2 x soufflage, 2 x brossage, 2 x soufflage et en les remplissant avec la masse à un composant et en vissant des tiges filetées dans la masse M12 encore molle et, après le temps de durcissement, en soumettant la fixation à un test de rupture d'adhérence,
et la résistance à la traction, le module de traction et l'allongement à la traction étant déterminés sur des bâtons d'épaule du type d'éprouvettes 1 BA dotés d'une longueur totale de 75,6 mm, d'une longueur de la partie parallèle de 39 mm, de longueurs de serrage de 58 mm, d'une vitesse d'allongement de 5 mm/min selon la norme DIN EN ISO 527.

2. Utilisation selon la revendication 1, dans laquelle
l'au moins un composé contenant un ou plusieurs groupes silane mentionné dans (a) est un polyéthylèneglycol ou en particulier un polypropylèneglycol à terminaison silane, qui présente des groupes terminaux de formule -O-(C=O)-NH-(CH₂)(_{1, 2 ou 3)}-SiCH₃(OCH₃)₂
et
l'au moins une résine de silicone contenant un groupe hydrolysable lié à Si mentionnée dans (b) est une résine de méthylsilicone et/ou de phénylsilicone, qui contient, par rapport à la masse de résine de silicone (b) au total, 0 à 65 % en poids de motifs structuraux dotés de motifs T fonctionnalisés par phényle, 0 à 95 % en poids de motifs T et/ou D, en particulier T, fonctionnalisés par méthyle et 5 à 40 % en poids de groupes hydrolysables liés à Si,
la teneur en motifs D se situant de préférence en dessous de 10 % en poids.

3. Utilisation selon l'une quelconque des revendications 1 et 2, **caractérisée en ce que** la proportion de l'au moins un composé (a) contenant un ou plusieurs groupes silane et de l'au moins une résine de silicone (b) contenant un groupe hydrolysable lié à Si par rapport à la masse totale de la résine synthétique est à chaque fois de 0,1 à 100, par ex. de 5 à 60 % en poids, par ex. de 10 à 50 % en poids et le rapport des ingrédients (a) et (b), par rapport à la masse de (a) et (b) ensemble, est ajusté entre 2:1 et 1:10, en particulier entre 3:2 et 1:3.

4. Utilisation selon l'une quelconque des revendications 1 à 3, **caractérisée en ce qu'**elle contient d'autres silanes, en particulier du 3-aminopropyl-triméthoxysilane, du N-(2-aminoéthyl)-3-amino-propyl-triméthoxysilane, du vinyltriméthoxysilane, et/ou du N-phénylaminométhylméthyldiméthoxysilane.

5. Utilisation selon l'une quelconque des revendications 1 à 4, **caractérisée en ce qu'**elle contient un ou plusieurs adjuvants supplémentaires habituels, en particulier choisis parmi des charges, des catalyseurs, des agents d'adhérence, des fixateurs d'eau et des additifs.

6. Utilisation selon l'une quelconque des revendications 1 à 5, le trou étant un puits dans un substrat de construction comportant des parois de trous contenant de l'eau.

7. Utilisation selon la revendication 6 d'une résine synthétique de fixation à un composant, le substrat de construction étant composé de briques ou de préférence de béton.

8. Procédé pour la fixation d'un élément d'ancrage dans un trou, en particulier dans un puits, dans un substrat de construction comportant une paroi de trous contenant de l'eau, des tensions composites de 12 à 35 N/mm², une résistance à la traction de 10 à 20 MPa, un module de traction de 1 à 3 GPa et un allongement à la traction de 3 % ou moins étant obtenus après son durcissement, comme défini dans la revendication 1, l'élément ancrage et une résine synthétique de fixation, telle que décrite selon l'une quelconque des revendications 1 à 5 étant déposés simultanément ou l'un après l'autre dans le trou et la résine synthétique de fixation étant laissée à durcir.

9. Procédé selon la revendication 8, le substrat de construction étant composé de briques ou de préférence de béton.

10. Dispositif de fixation, contenant un substrat de construction comportant un trou comportant une paroi de trous contenant de l'eau, en particulier de béton ou de briques, comme des tuiles creuses, ainsi que, à chaque fois déposés dans le trou, un élément d'ancrage et une résine synthétique de fixation telle que définie selon l'une quelconque des revendications 1 à 5 devant durcir ou durcie.
